Europäisches Patentamt

European Patent Office

Office européen des brevets

(11) Veröffentlichungsnummer : **0 104 386**
**B1**

## EUROPÄISCHE PATENTSCHRIFT

(45) Veröffentlichungstag der Patentschrift :
**28.05.86**

(21) Anmeldenummer : **83107921.5**

(22) Anmeldetag : **11.08.83**

(51) Int. Cl.⁴ : **B 60 J   3/02**

(54) **Sonnenblende für Fahrzeuge.**

(30) Priorität : **29.09.82 DE 3235997**

(43) Veröffentlichungstag der Anmeldung :
**04.04.84 Patentblatt 84/14**

(45) Bekanntmachung des Hinweises auf die Patenterteilung : **28.05.86 Patentblatt 86/22**

(84) Benannte Vertragsstaaten :
**DE FR GB IT SE**

(56) Entgegenhaltungen :
**US-A- 2 095 715**
**US-A- 2 201 348**
**US-A- 2 566 523**
**US-A- 3 032 371**
**US-A- 3 556 585**

(73) Patentinhaber : **Gebr. Happich GmbH**
**Postfach 10 02 49 Clausenbrücke 1**
**D-5600 Wuppertal 1 (DE)**

(72) Erfinder : **Kaiser, Klaus Peter**
**Sellscheid 42**
**D-5632 Wermelskirchen (DE)**
Erfinder : **Viertel, Lothar**
**V. Gartenreihe 48**
**D-6630 Saarlouis (DE)**

**Beschreibung**

Die Erfindung bezieht sich auf eine Sonnenblende für Fahrzeuge der im Oberbegriff des Anspruchs 1 angegebenen Art.

Derartige Sonnenblenden sind oberhalb der Windschutzscheiben in Fahrzeugen angeordnet und können durch die Lagerung des langen Achsschenkels im Drehlagergehäuse vor die Windschutzscheibe geklappt werden, um einen Schutz vor von vorne kommender Blendung zu bieten. Das Schwenklager bietet zudem die Möglichkeit, den Sonnenblendenkörper zu einer Fahrzeugseitenscheibe zu schwenken, in welcher Lage ein Schutz gegen seitlich ins Fahrzeug einfallende Lichtstrahlen erzielt wird.

Im allgemeinen sind die Sonnenblendenkörper zwar drehbeweglich, jedoch verschiebefest mit den sie tragenden Sonnenblendenachsen verbunden. Bei diesen bekannten Sonnenblenden besteht somit keine Möglichkeit, die Sonnenblendenkörper zur Fahrzeugmitte bzw. am Seitenfenster nach hinten zu verstellen.

Es sind auch schon Sonnenblenden für Fahrzeuge bekanntgeworden, bei denen der Sonnenblendenkörper in axialer Richtung verschiebbar auf der Sonnenblendenachse gelagert ist. Eine solche Konstruktion ist in der US-A-3 556 585 gezeigt. Bei dieser bekannten Sonnenblende sind jedoch große Verstellkräfte für ein axiales Verschieben des Sonnenblendenkörpers auf dem langen Schenkel der Sonnenblendenachse erforderlich, weil der Sonnenblendenkörper mittels Spannschellen kraftschlüssig an der Sonnenblendenachse befestigt ist. Durch die axiale Verstellbarkeit des Sonnenblendenkörpers können sich Fahrer und Beifahrer eines Fahrzeuges wesentlich besser vor einfallenden Sonnenstrahlen oder anderen Lichtquellen schützen. Die Ausnutzung dieses Vorteils wird aber durch die konstruktionsbedingte schwergängige Verschiebbarkeit des Sonnenblendenkörpers auf der Sonnenblendenachse in untragbarer Weise behindert.

Es ist nun Aufgabe der Erfindung, eine Sonnenblende der eingangs genannten Art dahingehend zu verbessern, daß der Sonnenblendenkörper ohne besonderen Kraftaufwand in axialer Richtung des langen Achsschenkels der Sonnenblendenachse verschiebbar ist.

Zur Lösung dieser Aufgabe ist erfindungsgemäß vorgesehen, daß der lange Achsschenkel aus zwei koaxial hintereinander angeordneten, verdrehfest miteinander gekuppelten Achsteilen besteht, die in axialer Richtung voneinander bei der Betätigung trennbar sind, wobei das dem kurzen Achsschenkel abgewandte Achsteil verschiebefest und radial geklemmt im Drehlagergehäuse angeordnet ist.

Die erfindungsgemäß ausgebildete Sonnenblende kann in der gekuppelten Lage ihres zweiteiligen Achsschenkels in gewohnter Weise verwendet und in unterschiedlichen Klapplagen vor die Windschutzscheibe gebracht werden. Da die Achsteile aber nur verdrehfest miteinander gekuppelt sind, können sie in axialer Richtung voneinander getrennt und damit der Sonnenblendenkörper entsprechend verschoben werden. Beim Verschieben des Sonnenblendenkörpers gleitet das Drehlagergehäuse behinderungsfrei über das ausgekuppelte Achsteil, welches nicht radial geklemmt im Drehlagergehäuse angeordnet ist. Je nach Länge des Achsteils sind damit große Verstellwege für den Sonnenblendenkörper ermöglicht, so daß dieser bei Anordnung an einem Fahrzeugseitenfenster weit nach hinten verstellt werden kann, womit einem seit langem bestehenden Bedürfnis Rechnung getragen wird. Beim Zurückschieben des Sonnenblendenkörpers in die Ausgangslage kuppeln die Achsteile wieder ineinander, wonach das Verschwenken des Sonnenblendenkörpers um die horizontale Drehachse in gewohnter Weise erfolgen kann, wobei zufolge der radialen Klemmung des einen Achsteils der Sonnenblendenkörper in jeder Schwenkstellung selbsttätig feststellbar ist. Eine solche Feststellbarkeit des Sonnenblendenkörpers ist nicht erforderlich, wenn er einen Seitenfensterbereich eines Fahrzeuges abschirmen soll, weil hier im allgemeinen eine etwa parallele Ausrichtung zur Seitenscheibe erwünscht ist.

Bevorzugterweise besteht der zweiteilige Achsschenkel aus einem langen und einem gegenüber diesem wesentlich kürzeren Achsteil, welch letzteres verschiebefest im Drehlagergehäuse angeordnet ist. Das kurze Achsteil dient im Zusammenwirken mit einer es radial belastenden Rastfeder dazu, den Sonnenblendenkörper in den jeweiligen Klapplagen zu halten, wenn es mit dem anderen Achsteil gekuppelt ist. Das kurze Achsteil kann daher wesentlich, z. B. im Verhältnis von 1 : 5 bis 1 : 10 kürzer als das lange Achsteil ausgebildet sein, mit dem Vorteil, daß der Achsschenkel nahezu über seine gesamte Länge als Verschiebeweg für den Sonnenblendenkörper zur Verfügung steht.

Für das Zusammenkuppeln weist eines der Achteile zumindest einen Steckansatz und das andere Achsteil eine Steckaufnahme für diesen auf, die zwecks Schaffung eines großen das Einkuppeln erleichternden Findungsbereichs eintrittsseitig durch Abschrägungen od. dgl. erweitert ist.

In weiterer Ausgestaltung der Erfindung weist das lange Achsteil an seinem dem kurzen Achsteil benachbarten Endbereich einen das Achsteil radial überragenden, vorzugsweise durch eine Feder nach außen belasteten Rastnocken auf, der durch Einrasten in einen am Drehlagergehäuse anderendig vorgesehenen Schlitz od. dgl. den Verschiebeweg des Sonnenblendenkörpers begrenzt. Damit wird ein vollständiges Abziehen des Sonnenblendenkörpers von der Sonnenblendenachse verhindert.

Eine weitere besonders vorteilhafte Maßnahme der Erfindung besteht darin, daß das lange Achsteil an seinem dem kurzen Achsteil zugewandten Endbereich von einem ggf. längsgeschlitzten, erhöhte Gleiteigenschaften aufweisenden Ring konzentrisch umgriffen ist, wobei der Ring, der bevorzugt aus Kunststoff besteht, in einer Ringnut des langen Achsteils verschiebefest angeordnet ist. Diese Maßnahme fördert zum einen die angestrebte leichtgängige Verschiebbarkeit des Sonnenblendenkörpers auf dem langen Achsteil und beugt einer Geräuschentwicklung, insbesondere einem Klappern vornehmlich dann vor, wenn die nach Art eines Gleitlagers miteinander verbundenen Teile aus einem metallischen Werkstoff bestehen, was im allgemeinen der Fall sein wird. Die angestrebte leichtgängige, klapperfreie und verkantungsfreie Verschiebbarkeit des Sonnenblendenkörpers wird optimiert, wenn nach einem weiteren bevorzugten Merkmal der Erfindung am achseneinsteckseitigen Endbereich des Drehlagergehäuses eine das lange Achsteil konzentrisch umgreifende Gleithülse verschiebefest angeordnet ist: Dabei kann das Drehlagergehäuse im Aufnahmebereich der Gleithülse eine Gehäuseausnehmung für eine die Gleithülse radial spannende und axial halternde Feder aufweisen. Hiedurch wird eine gewisse Bremswirkung erzeugt, die eine ungewollte, selbsttätige Verschiebung des Sonnenblendenkörpers auf dem langen Achsteil verhindert.

Schließlich kann das Drehlagergehäuse im Aufnahmebereich des kurzen Achsteils eine Gehäuseausnehmung für eine das kurze Achsteil radial spannende und axial halternde Feder aufweisen, wobei das kurze Achsteil mit zumindest einer sich axial erstreckenden Abflachung ausgebildet ist, welche als Endrastung dient.

Ein Ausführungsbeispiel der Erfindung wird nachfolgend anhand der Zeichnung näher erläutert. Es zeigen :

Figur 1   eine Sonnenblende in Ansicht,

Figur 2   die Sonnenblende nach Fig. 1 mit auf der Sonnenblendenachse verschobenen Sonnenblendenkörper

und

Figur 3   das Sonnenblendendrehlager nebst zugehörigen Einzelteilen in einer Explosivdarstellung.

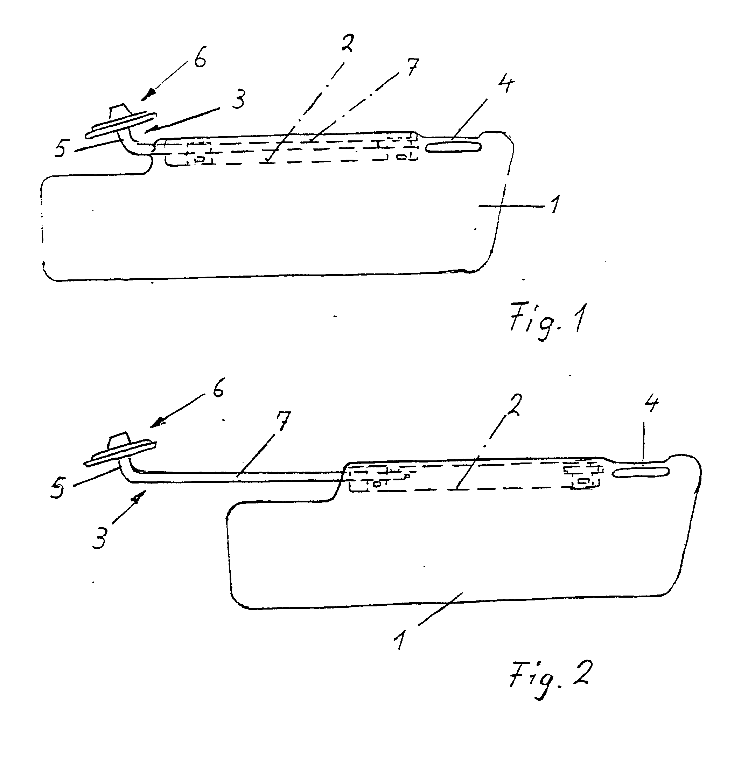

Die neue Sonnenblende besteht aus einem Sonnenblendenkörper 1, der im Bereich seiner oberen Längskante ein Drehlagergehäuse 2 mit einer Sonnenblendenachse 3 und eine Achse 4 für ein nicht dargestelltes Gegenlager aufweist. Die Sonnenblendenachse 3 besitzt eine etwa L-förmige Ausbildung, deren kurzer Schenkel 5 von einem Schwenklagergehäuse 6 und deren langer Schenkel 7 vom Drehlagergehäuse 2 aufgenommen ist. Der Sonnenblendenkörper 1 ist üblicherweise auf dem langen Schenkel 7 der Sonnenblendenachse 3 in der aus Fig. 1 ersichtlichen Lage angeordnet. Damit sich Fahrer und Beifahrer eines Fahrzeuges besser vor einfallenden Sonnenstrahlen oder anderer Lichteinwirkung schützen können, ist eine verschiebbare Anordnung des Sonnenblendenkörpers 1 auf dem langen Schenkel 7 der Sonnenblendenachse 3 vorgesehen.

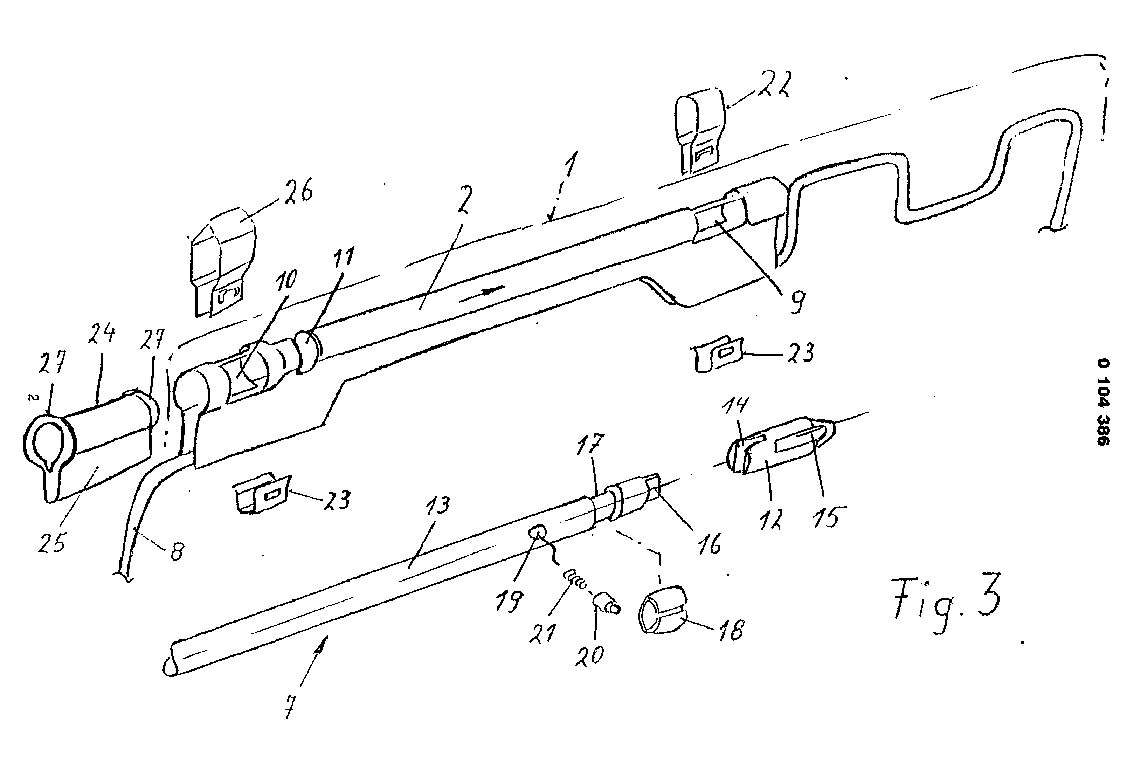

Die für die verschiebbare Lagerung des Sonnenblendenkörpers getroffenen Maßnahmen werden nun anhand von Fig. 3 näher erläutert. Das Drehlagergehäuse 2 weist eine rohrartige Ausbildung auf und ist vorzugsweise aus einem Stanzblechteil hergestellt. Das Drehlagergehäuse 2 ist starr mit einem den hier nur strichpunktiert angedeuteten Sonnenblendenkörper 1 aussteifenden Drahtrahmen 8 verbunden und erstreckt sich von der Einsteckseite des langen Schenkels 7 bis etwa zur Achse 4. An den beiden Endbereichen des Drehlagergehäuses 2 sind fensterartige Öffnungen 9 und 10 vorgesehen und unmittelbar neben der Öffnung 10 befindet sich eine Schlitzöffnung 11. Im Querschnitt betrachtet, besitzt das Drehlagergehäuse 2 eine etwa U-förmige Ausbildung, wobei der die Schenkel miteinander verbindende Steg rohrartig gebogen ist und als Drehlager- sowie Gleitlageraufnahme für den langen Schenkel 7 der Sonnenblendenachse 3 dient.

In Fig. 3 ist lediglich der lange Schenkel 7 der Sonnenblendenachse 3 dargestellt, welcher zweiteilig ausgebildet ist und aus dem kurzen Achsteil 12 und dem langen Achsteil 13 besteht. Das kurze Achsteil 12 weist einendig eine Steckaufnahme 14 und anderendig eine kegelförmige Gestaltung auf und ist ferner mit zumindest einer sich axial erstreckenden Abflachung 15 versehen. Das lange Achsteil 13 weist am freien Ende einen überstehenden unrunden Steckzapfen 16 auf, welcher in die Steckaufnahme 14, die mit Einlaufschrägen ausgebildet ist, einsteckbar ist. In der gekuppelten Lage besteht somit zwischen den Achsteilen 12 und 13 eine verdrehfeste, jedoch axial lösbare Verbindung.

Das lange Achsteil 13 weist an seinem dem Steckzapfen 16 benachbarten Endbereich eine Ringnut 17 mit einem darin radial überstehend angeordneten Ring 18 auf, der aus einem Gleiteigenschften aufweisenden Kunststoffmaterial bestehen und mit einem axial durchlaufenden Schlitz versehen sein kann. Nahe neben der Ringnut 17 befindet sich im langen Achsteil 13 eine Sackbohrung 19, in die ein Rastnocken 20 und eine diesen nach außen belastende Schraubenfeder 21 eingesetzt ist. Nach der Montage des Rastnockens 20 wird der Rand der Sackbohrung 19 leicht angestaucht, um den Rastnocken gegen Verlieren zu sichern.

Die zusammengesteckten Achsteile 12 und 13 werden in Pfeilrichtung in das Drehlagergehäuse 2 eingeschoben. Danach ist das kurze Achsteil 12 im Drehlagergehäuse 2 gehaltert, und zwar durch eine in Höhe der fensterartigen Öffnung 9 über das Drehlagergehäuse 2 geschobene U-förmige Rastfeder 22, deren freie Schenkelenden durch ein aufzuschiebendes Arretierungsglied 23 gegen Abheben gesichert werden können.

Im achseneinsteckseitigen Ende des Drehlagergehäuse 2 sitzt eine das lange Achsteil 13 konzentrisch umgreifende Gleithülse 24 mit einem angeformten Ansatz 25, der zwischen die Schenkel des Drehlagergehäuses 2 greift und damit verdrehfest angeordnet ist. Eine Sicherung gegen ein axiales Herausziehen wird durch eine U-förmige Klemmfeder 26 in Verbindung mit Endnocken 27 bewirkt, deren Schenkel durch ein Arretierungsglied 23 gegen Abheben gesichert werden können. Die Klemmfeder 26 spannt die Gleithülse 24 mit einer Anpreßkraft gegen den langen Achsteil 13, die groß genug ist, um eine selbsttätige Verschiebung des Sonnenblendenkörpers 1 zu verhindern, andererseits aber auch nicht so groß ist, um ein gewolltes Verschieben zu behindern.

Der Sonnenblendenkörper 1 kann um die horizontale Drehachse, welche durch den langen Schenkel 7 gebildet ist, vor die Windschutzscheibe geschwenkt werden und wird dabei in jeder möglichen Schwenkstellung durch die Rastfeder 22 gehalten. Eine zusätzliche Halterung in zumindest einer Endstellung ist durch die Abflachung 15 gesichert. Der Sonnenblendenkörper 1 kann ferner um die etwa vertikale Drehachse, welche durch den kurzen im Schwenklagergehäuse 6 aufgenommenen Achsschenkel 5 gebildet ist, zur Fahrzeugseitenscheibe geschwenkt werden. Hier reicht die Länge des Sonnenblendenkörpers 1 oftmals nicht aus, um den hinteren. Scheibenbereich abzudecken, der aber gerade kritisch in bezug auf seitlich einfallende Lichtstrahlen ist. Die neue Sonnenblende läßt nun eine ausreichende Verstellung des Sonnenblendenkörpers 1 nach hinten zu. Die Verschiebung ist ohne Kraftaufwand ermöglicht, und zwar -insbesondere deshalb, weil das radial durch die Rastfeder 22 geklemmte Achsteil 12 einfach abgekuppelt wird und weil vorzugsweise zusätzlich Gleitmittel (Ring 18 und Gleithülse 24) vorgesehen sind. Bei einer Sonnenblende durchschnittlicher Größe ist ein Verschiebeweg von z. B. 150 mm ohne weiteres realisierbar. Als Schiebewegbegrenzung dient der in den Schlitz 11 einrastende Rastnocken 20.

**Patentansprüche**

1. Sonnenblende für Fahrzeuge, im wesent- lichen bestehend aus einem Sonnen- blendenkörper (1), einem darin im Bereich einer Längskante eingelagerten Drehlagergehäuse (2) und einer etwa L-förmig ausgebildeten Sonnenblendenachse (3), deren kurzer Achsschenkel (5) von einem Schwenklagergehäuse (6) und deren langer Achsschenkel (7) vom Drehlagergehäuse (2) aufgenommen ist, wobei der Sonnenblendenkörper (1) in axialer Richtung des langen Achsschenkels (7) verschiebbar ist, dadurch gekennzeichnet, daß der lange Achsschenkel (7) aus zwei koaxial hintereinander angeordneten, verdrehfest miteinander gekuppelten Achsteilen (12 und 13) besteht, die in axialer Richtung bei der Betätigung voneinander trennbar sind, wobei das dem kurzen Achsschenkel (5) abgewandte Achsteil (12) verschiebefest und radial geklemmt im Drehlagergehäuse (2) angeordnet ist.

2. Sonnenblende nach Anspruch 1, dadurch gekennzeichnet, daß der zweiteilige Achsschenkel (7) aus einem langen und einem gegenüber diesem wesentlich kürzeren Achsteil (13 bzw. 12) besteht, welch letzteres verschiebefest im Drehlagergehäuse (2) angeordnet ist.

3. Sonnenblende nach Anspruch 1 oder 2, dadurch gekennzeichnet, daß eines der Achsteile (12 oder 13) zumindest einen Steckansatz (16) und das andere Achsteil eine Steckaufnahme (14) für diesen aufweist, die eintrittsseitig durch Abschrägungen od. dgl. erweitert ist.

4. Sonnenblende nach einem oder mehreren der Ansprüche 1 bis 3, dadurch gekennzeichnet, daß das lange Achsteil (13) an seinem dem kurzen Achsteil (12) benachbarten Endbereich einen das Achsteil (13) radial überragenden, vorzugsweise durch eine Feder (21) nach außen belasteten Rastnocken (20) aufweist, der durch Einrasten in einen am Drehlagergehäuse (2) anderendig vorgesehenen Schlitz (11) od. dgl. den Verschiebeweg des Sonnenblendenkörpers (1) begrenzt.

5. Sonnenblende nach einem oder mehreren der Ansprüche 1 bis 4, dadurch gekennzeichnet, daß das lange Achsteil (13) an seinem dem kurzen Achsteil (12) zugewandten Endbereich von einem ggf. längsgeschlitzten, erhöhte Gleiteigenschaften aufweisenden Ring (18) konzentrisch umgriffen ist.

6. Sonnenblende nach Anspruch 5, dadurch gekennzeichnet, daß der vorzugsweise aus Kunststoff bestehende Ring (18) in einer Ringnut (17) des langen Achsteils (13) verschiebefest angeordnet ist.

7. Sonnenblende nach einem oder mehreren der Ansprüche 1 bis 6, dadurch gekennzeichnet, daß am achseneinsteckseitigen Endbereich des Drehlagergehäuses (2) eine das lange Achsteil (13) konzentrisch umgreifende Gleithülse (24) verschiebefest angeordnet ist.

8. Sonnenblende nach Anspruch 7, dadurch gekennzeichnet, daß das Drehlagergehäuse (2) im Aufnahmebereich der Gleithülse (24) eine Gehäuseausnehmung (10) für eine die Gleithülse (24) radial spannénde und axial halternde Klemm- feder (26) aufweist.

9. Sonnenblende nach einem oder mehreren der Ansprüche 1 bis 8, dadurch gekennzeichnet, daß das Drehlagergehäuse (2) im Aufnahmebereich des kurzen Achsteils (12) eine Gehäuseausnehmung (9) für eine das kurze Achsteil (12) radial spannende und axial halternde Rastfeder (22) aufweist, wobei das kurze Achsteil (12) mit zumindest einer sich axial erstreckenden durch die Rastfeder (22) beaufschlagbaren Abflachung (15) ausgebildet ist.

**Claims**

1. A sun visor for a vehicle, the visor comprising a visor body (1), a pivot bearing (2) embedded in the body close to one of the major edges thereof, and a substantially L-shaped visor shaft (3) having a short leg (5) mounted in a swivel bearing (6) and a long leg (7) mounted in the pivot bearing (2), the visor body (1) being displaceable in the axial direction of the shaft's long leg (7), characterized in that the long leg (7) is made up of two axially aligned leg sections (12 and 13) joined rotationally fast to yet — on manipulation — axially separable from one another, and in that the leg section (12) remote from the shaft's short leg (5) is mounted axially non-displaceably and radially clamped in the pivot bearing (2).

2. A sun visor according to claim 1, characterized in that one section of the two-sectional leg (7) is a long one whilst, compared therewith, the other one is a substantially shorter section (13 and 12 respectively), and in that the shorter section is axially non-displaceably mounted in the pivot bearing (2).

3. A sun visor according to claim 1 or claim 2, characterized in that one of the leg sections (12 or 13) is provided with at least one plug-in protrusion (16) and the other leg section with a plug-in socket (14) for receiving the protrusion, and in that the mouth of the socket is enlarged by means of a chamfer or the like.

4. A sun visor according to any one or more of the claims 1 to 3, characterized in that the long leg section (13) is provided at its end portion adjacent to the short leg section (12) with a lock knob (20) which projects radially beyond the leg section (13), which, preferably, is radially outwardly biased by a spring (20) and which as a result of engaging a groove (11) or the like provided in the pivot bearing's (2) end portion remote from the short leg section limits the displacement of the visor body (1).

5. A sun visor according to any one or more of the claims 1 to 4, characterized in that the long section's (13) end portion adjacent to the short leg section (12) is concentrically surrounded by a ring (18) which is made of a material having superior slide characteristics and which may be slit longitudinally.

6. A sun visor according to claim 5, characterized in that the ring (18) which, preferably, is made of a plastics material is arranged axially non-displaceably in an annular groove (17) of the long leg section (13).

7. A sun visor according to any one or more of the claims 1 to 6, characterized in that a slide collar (24) is arranged axially non-displaceably in the pivot bearing's (2) end portion through which the shaft's long leg is inserted there-into, and in that the collar concentrically surrounds the long leg section (13).

8. A sun visor according to claim 7, characterized in that the pivot bearing (2) is provided in the end portion accommodating the slide collar (24) with a recess (10) for receiving a clamping spring (26) which clamps the collar (24) radially and locks it axially.

9. A sun visor according to any one or more of the claims 1 to 8, characterized in that the pivot bearing (2) is provided in its region accommodating the short leg section (12) with a further recess (9) for receiving a stop spring (22) which clamps the short leg section (12) radially and locks it axially, and in that the short leg section (12) is provided with at least one axially extending truncation (15) engageable by the stop spring (22).

**Revendications**

1. Pare-soleil pour véhicules, constitué essentiellement par un corps de pare-soleil (1), un boîtier de palier de rotation (2) monté dans celui-ci dans la zone d'une arête longitudinale, et par un axe de pare-soleil sensiblement en forme de L (3), dont la branche d'axe courte (5) est tenue par un boîtier de palier de pivotement (6) et dont la branche d'axe longue (7) est tenue par le boîtier de palier de rotation (2), le corps de pare-soleil (1) pouvant être déplacé dans le sens axial de la branche d'axe longue (7), caractérisé en ce que la branche d'axe longue (7) est constituée par deux parties d'axe (12 et 13) couplées ensemble de façon à ne pas pouvoir tourner l'une par rapport à l'autre, lesquelles peuvent être séparées l'une de l'autre dans le sens axial lors de l'actionnement, la partie d'axe (12) opposée à la branche d'axe courte (5) étant montée dans le boîtier de palier de rotation (2) sans pouvoir se déplacer et en étant coincée radialement.

2. Pare-soleil selon la revendication 1, caractérisé en ce que la branche d'axe (7) en deux parties est constituée par une partie d'axe longue (13) et une partie d'axe nettement plus courte que celle-ci (12), qui est montée dans le boîtier de palier de rotation (2) sans pouvoir se déplacer.

3. Pare-soleil selon la revendication 1 ou 2, caractérisé en ce qu'une des parties d'axe (12 ou 13) comporte au moins un prolongement d'enfichage (16) et l'autre partie d'axe comporte un logement d'enfichage (14) pour celui-ci, qui est élargie du côté de l'entrée par des surfaces obliques ou l'analogue.

4. Pare-soleil selon l'une ou plusieurs des revendications 1 à 3, caractérisé en ce que la partie d'axe longue (13) comporte dans sa zone terminale voisine de la partie d'axe courte (13) un téton d'encliquetage (20) dépassant radialement de la partie d'axe (13) et contraint vers l'extérieur de préférence par un ressort (21), lequel téton, en s'encliquetant dans une fente (11) ou l'analogue prévue à l'autre extrémité dans le boîtier de palier de rotation (2) limite le trajet de déplacement du corps de pare-soleil (1).

5. Pare-soleil selon l'une ou plusieurs des revendications 1 à 4, caractérisé en ce que la partie d'axe longue (13) est entourée concentriquement, dans sa zone terminale tournée vers la partie d'axe courte (12), par une bague (18), éventuellement fendue dans le sens longitudinal, présentant des propriétés de glissement accrues.

6. Pare-soleil selon la revendication 5, caractérisé en ce que la bague (18), de préférence en matière plastique, est disposée sans pouvoir se déplacer dans une gorge annulaire (17) de la partie d'axe longue (13).

7. Pare-soleil selon l'une ou plusieurs des revendications 1 à 6, caractérisé en ce que dans la zone terminale, côté enfichage de l'axe, du boîtier de palier de rotation (2), est disposé sans pouvoir se déplacer un fourreau (24) qui entoure concentriquement la partie d'axe longue (13).

8. Pare-soleil selon la revendication 7, caractérisé en ce que le boîtier de palier de rotation (2) comporte dans la zone de logement du fourreau (24) un évidement de boîtier (10) ou un ressort de serrage (26) qui serre radialement et maintient axialement le fourreau (24).

9. Pare-soleil selon une ou plusieurs des revendications 1 à 8, caractérisé en ce que le boîtier de palier de rotation (2) comporte dans la zone de logement de la partie d'axe courte (12) un évidement de boîtier (9) pour un ressort d'encliquetage (22) qui serre la partie d'axe courte (12) radialement et la maintient axialement, la partie d'axe courte (12) étant réalisée avec au moins une partie aplatie (15) s'étendant axialement et soumise à l'action du ressort d'encliquetage (22).

Fig. 1

Fig. 2

Fig. 3

0 104 386